(19) Europäisches Patentamt

European Patent Office

Office européen des brevets

(11) **EP 4 024 878 A1**

(12) **EUROPEAN PATENT APPLICATION**

(43) Date of publication:
**06.07.2022 Bulletin 2022/27**

(21) Application number: **20217940.4**

(22) Date of filing: **30.12.2020**

(51) International Patent Classification (IPC):
*H04N 21/43* (2011.01)   *H04N 21/439* (2011.01)
*H04N 21/44* (2011.01)   *H04N 17/00* (2006.01)

(52) Cooperative Patent Classification (CPC):
**H04N 21/4302; H04N 21/4394; H04N 21/44008;**
H04N 19/68

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Advanced Digital Broadcast S.A.
1293 Bellevue (CH)**

(72) Inventor: **PISZCZALKOWSKI, Pawel
65-119 Zielona Gora (PL)**

(74) Representative: **Kancelaria Eupatent.pl Sp. z.o.o
Ul. Kilinskiego 185
90-348 Lodz (PL)**

(54) **A METHOD AND A SYSTEM FOR TESTING AUDIO-VIDEO SYNCHRONIZATION OF AN AUDIO-VIDEO PLAYER**

(57)     A system for testing audio-video (AV) synchronization of an audio-video (AV) player (130), the system comprising: a source (150) of at least one audio-video (AV) test stream comprising an audio track (11) with an audio test fragment (11T) and a video track (12) with a video test fragment (12T), wherein the audio test fragment (11T) has a known location with respect to the video test fragment (12T); an audio-video (AV) presenting device (110) having an audio-video (AV) input interface (113), a video display screen (112) and an audio output (111); a detector device (120) comprising a photodetector (122) for outputting a video detection signal with a video signal indicator corresponding to the detected video test fragment, an audio detector (121) for outputting an audio detection signal with an audio signal indicator corresponding to the detected audio test fragment, a timer (123) and a signal analyzer (124); wherein the detector device (120) is configured to be arranged with respect to the AV presenting device (110) such that the photodetector (122) can sense the image displayed by the display screen (112) and the audio detector (121) can sense the sound generated by the audio output (111) and wherein the signal analyzer (124) is configured to output a time difference ($T_{sync\_detected}$) between the audio signal indicator and the video signal indicator; and a data analyzer (140) configured to receive and store the time difference ($T_{sync\_detected}$) for the test stream.

Fig. 1

EP 4 024 878 A1

## Description

TECHNICAL FIELD

The present invention relates to testing audio-video synchronization, which is useful during development and testing of new models of audio-video players or testing software upgrades/updates.

BACKGROUND

The present invention relates to various kinds of audio-video players, such as digital television receivers, digital media players, smartphones or general purpose computers with audio-video software players.

A typical audio-video stream includes separate video and audio tracks that need to be synchronized with one another during playback in order to provide a realistic and immersive user experience. For example, a video track that shows a person speaking needs to be synchronized with an audio track of the voice of that person in order to mimic the real-world experience of viewing a person that is speaking. It is important to maintain synchronization between video tracks and audio tracks to provide users with a quality viewing experience.

Synchronization errors may occur, typically due to errors in software that decodes and generates the audio and video data to be played, causing a delay of the audio track relative to the video track or vice versa.

When developing a new model of an audio-video player, it is important to test its operation with respect to synchronization of audio and video streams of various supported formats, in order to limit synchronization errors in operation.

So far, this task was complicated and required laborious manual operations (oscilloscope measurements) or sophisticated devices.

For example, a US patent application US2020160889 discloses a neural network system that is trained to identify one or more portions of a media title where synchronization errors are likely to be present. The neural network system is trained based on a first set of media titles where synchronization errors are present and a second set of media titles where synchronization errors are absent. The second set of media titles can be generated by introducing synchronization errors into a set of media titles that otherwise lack synchronization errors. Via training, the neural network system learns to identify specific visual features included in one or more video frames and corresponding audio features that should be played back in synchrony with the associated visual features. Accordingly, when presented with a media title that includes synchronization errors, the neural network can indicate the specific frames where synchronization errors are likely to be present.

SUMMARY

There is a need to provide an improved system and method for testing audio-video synchronization of an audio-video player.

The object of the invention is a system for testing audio-video synchronization of an audio-video player, the system comprising: a source of at least one audio-video test stream comprising an audio track with an audio test fragment and a video track with a video test fragment, wherein the audio test fragment has a known location with respect to the video test fragment; an audio-video presenting device having an audio-video input interface, a video display screen and an audio output; a detector device comprising a photodetector for outputting a video detection signal with a video signal indicator corresponding to the detected video test fragment, an audio detector for outputting an audio detection signal with an audio signal indicator corresponding to the detected audio test fragment, a timer and a signal analyzer; wherein the detector device is configured to be arranged with respect to the AV presenting device such that the photodetector can sense the image displayed by the display screen and the audio detector can sense the sound generated by the audio output and wherein the signal analyzer is configured to output a time difference between the audio signal indicator and the video signal indicator; and a data analyzer configured to receive and store the time difference for the test stream.

Preferably, the test stream comprises a plurality of audio test fragments and video test fragments.

Preferably, the source comprises a plurality of AV test streams that differ from each other by at least one of: video coding method, video resolution, audio coding method.

Preferably, the audio test fragment is an audio tone of a predetermined frequency.

Preferably, the video test fragment is a blank screen of a predetermined color, preferably black or white.

Preferably, the video test fragment is a blank fragment of a screen, the fragment being of a predetermined color, preferably black or white.

Preferably, the photodetector is a photo sensitive diode, a phototransistor or a photoresistor.

Preferably, the audio detector is a microphone.

Preferably, the audio detector is connected to a headphone output of the AV presenting device.

Another object of the invention is a method for testing audio-video synchronization of an audio-video player in a system according to any claims presented herein, the method comprising: sending a command to process a selected AV stream from the data analyzer to the AV player; collecting detection data corresponding to detected synchronization error at the data analyzer; correcting the detected synchronization error by a predetermined synchronization error introduced by the AV presenting device to obtain the actual synchronization error at the AV data output by the AV player; and storing the synchronization error value for the selected AV stream.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

BRIEF DESCRIPTION OF DRAWINGS

The present invention will be shown by means of example embodiments on a drawing, wherein:

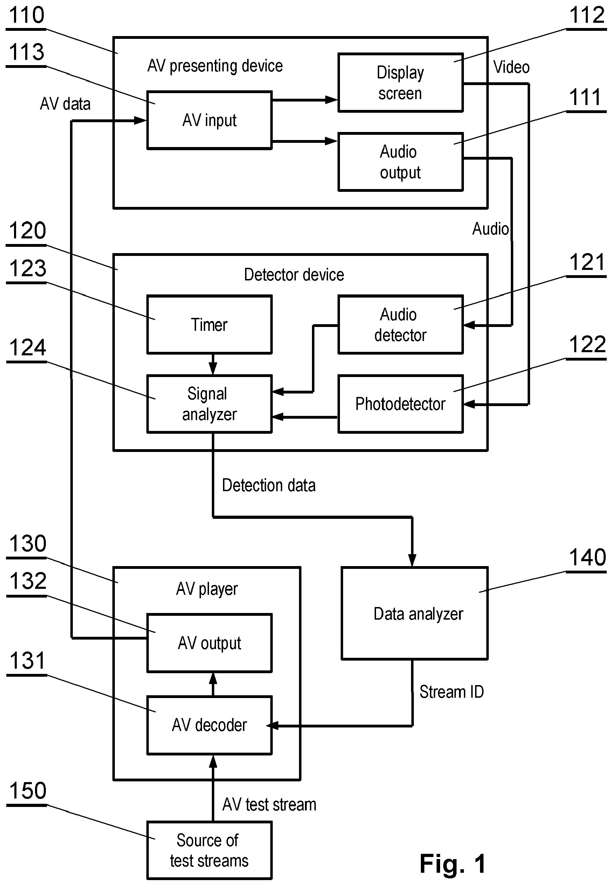

Fig. 1 shows an overall structure of the system for testing audio-video synchronization of an audio-video player;
Fig. 2 shows a method for testing audio-video synchronization of an audio-video player;
Fig. 3 shows an example arrangement of a detector device on a screen;
Fig. 4 shows an example of an audio track and a video track with test fragments;
Figs. 5A-5C show examples of synchronization test streams;
Fig. 6 shows examples of synchronization errors;

Fig. 7 shows an example of collected data on synchronization errors for different AV test streams.

DETAILED DESCRIPTION

The method and system of the present invention allow to test audio-video (AV) synchronization of an AV player with a simple detector device. It can be used for example to test what is the exact synchronization error or whether the synchronization error (measured as a delay between the audio track and the video track) is within an allowable threshold, such as between -20 and +30 ms. The detector device provides data representing the synchronization error in real time, in accordance with the test streams, that can be easily processed and statistically examined. The testing process can be automated and requires minimal manual labor.

The testing is performed for at least one test stream. Preferably, a plurality of test streams are prepared, which differ by:

- type of video standard, such as MPEG2, H.264, H. 265;
- video resolution, such as 576i/720P/1080i/1080P/4K;
- type of audio stream, such as MPEG1, MPEG2, AC3, AC3+, AAC, HEAAC;

For example, in order to test the combinations of the above characteristics, 3*5*4 = 60 test streams can be generated.

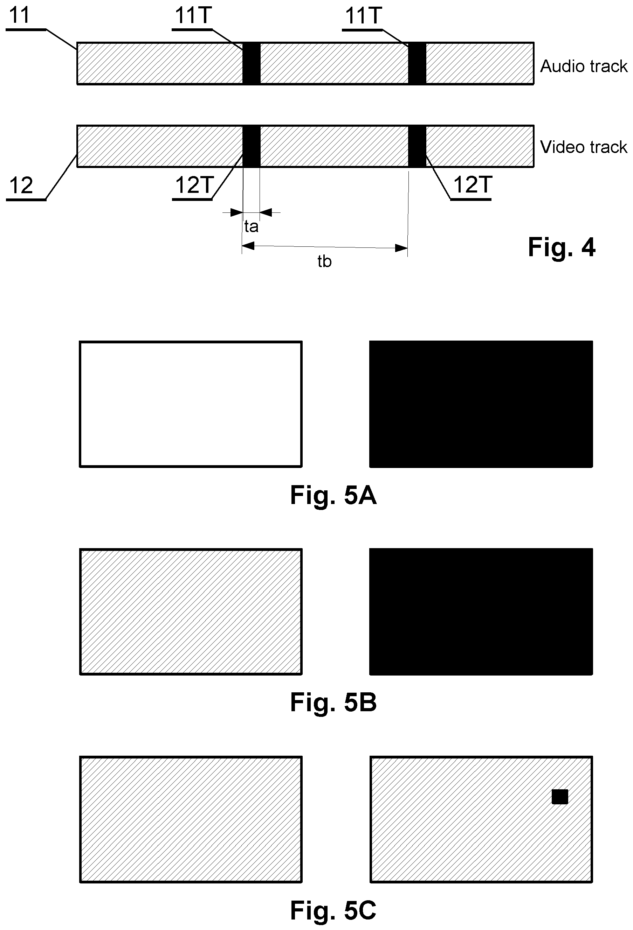

A structure of a test stream is shown schematically in Fig. 4. The stream comprises an audio track 11 with at least one audio test fragment 11T and a video track 12 with at least one video test fragment 12T. The test fragment 11T, 12T contains a predetermined content which is detectable by the detector. For example, the audio test fragment 11T may contain a tone of a specific frequency and amplitude, such as a 3kHz tone of maximum volume. For example the video test fragment 12T may contain a black image which occupies the whole screen or a fragment of the screen. The other content of the audio and video stream is arbitrary - for example, it can have no content, typical content (such as a movie fragment) or randomly-generated noise. Preferably, the other content is pre-processed such as to exclude content that corresponds to test fragments 11T, 12T such as to avoid accidental detections.

In one example, as shown in Fig. 5A, the test fragment (on the right) may be a black screen and the other content (on the left) may be a white screen. In another example, as shown in Fig. 5B, the test fragment (on the right) may be a black screen and the other content (on the left) may be a fragment of a movie. In yet another example, as shown in Fig. 5C, the test fragment (on the right) may be a black rectangle on a portion of the screen and the other content (on the left) may be a fragment of a movie. Alternatively, the test fragment may be white or may have any other color that can be detected by the photodetector.

The test fragment 11T, 12T has preferably a short, impulse-type duration $t_a$, such as 1ms (millisecond) or 5 ms or 10ms or 20ms. In general, the length of the impulse depends on the capabilities of the AV presenting device. The distance $t_b$ between the test fragments is preferably short, such as 50ms, or 100ms, or 500ms or 1s (second). Preferably, the audio test fragment begins at the same time as the video test fragment, but they may be also shifted by some period of a known value. The duration of the audio test fragment is preferably the same as the duration of the video test fragment 12T, but they may be also different. If the stream contains a plurality of test fragments, then the duration $t_a$ and distance $t_b$ of each fragment may be the same for each fragment or may differ (to allow testing of different signal scenarios).

The test streams are stored in a test streams source 150, for example on a hard disk, a pendrive, a network storage, cloud server etc.

A data analyzer 140 that controls the testing process instructs an AV player 130 to receive, decode and output a particular test stream, for example by sending a stream identifier (ID). The data analyzer 140 can be a general purpose computer, such as a PC, with control software installed.

The AV player 130 can be any device comprising a hardware or software audio-video decoder 131 that is to be tested for synchronization errors. The AV decoder 131 receives a particular test stream, decodes it and provides to an AV output 132, such as a HDMI (High Definition Multimedia Interface) output. The aim of the present system is to detect whether there are any synchronization errors in the AV data output via the AV output interface 132. Moreover, the AV output interface may also introduce some transmission delay, therefore the device can test the operation of the elements 131 and 132.

The AV data is input to an AV presenting device 110, such as a typical TV set. The AV presenting device 110 has an AV input 113 that receives the AV data and generates an audio signal to be output via an audio output 111 (such as speakers or headphones output) and a video signal to be output via a display screen 112 (such as a LED matrix). The device can be also used with image projectors to test the delay introduced by the projector (then, preferably the test signal should be an impulse of a white screen). The AV presenting device introduces its specific synchronization delay $T_{sync\_TV}$ between the input audio and video data, which is constant for all AV data and can be predetermined, for example by measuring with an oscilloscope.

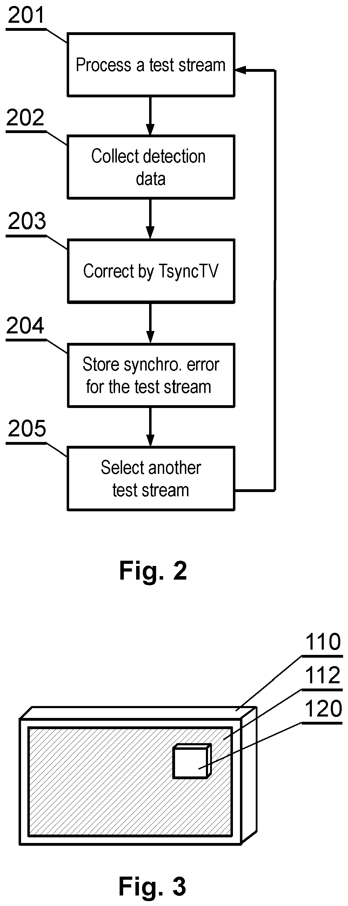

A detector device 120 is used to detect the audio and video output of the AV presenting device 110. For example, the detector device can have a form of a small box attachable to the display screen 112 of the AV presenting device 110 (e.g. by means of a sucker), as shown schematically in Fig. 3. The detector device 120 contains an audio detector 121, such as a microphone configured to receive the sound emitted by speakers of the AV presenting device or a voltage meter configured to receive the audio signal output via a headphones interface. The detector device 120 further contains a photodetector 122, such as a photo sensitive diode, a phototransistor or a photoresistor (preferably, having a quick detection time, preferably below 1ms), configured to receive the light emitted by the display screen 112. Upon detecting a test signal, the audio detector 121 and the photodetector 122 generate an indicator in a signal (e.g. an impulse or a change in signal state). An analyzer 124 receives the output of the detectors 121 and 122 and determines the time difference (according to measurements of the timer 123) between the indicators in the audio and video signals and outputs it as a $T_{sync\_detected}$ (for example via a data exchange port such as a serial interface or USB).

The method is carried out as shown in Fig. 2. First, the data analyzer 140 selects a first test stream and controls the AV player 130 to process it by decoding and providing AV data at the AV output 132. This causes the AV presenting device 110 to generate audio and video with test fragments that are detected by the detector device 120. Consequently, the detector device 120 outputs detection data, i.e. the value $T_{sync\_detected}$ that indicates the measured difference between the audio and video test fragments. The data analyzer 140 collects in step 202 the value of $T_{sync\_detected}$ and corrects it in step 203 by the known synchronization delay $T_{sync\_TV}$ introduced by the AV presenting device to obtain the actual synchronization error that is present in the AV data generated by the AV player 130 as:

$$T_{sync} = T_{sync\_detected} - T_{sync\_TV}$$

Next, in step 204 the data analyzer stores the calculated $T_{sync}$ for the analyzed test signal and in step 205 selects another test signal for testing.

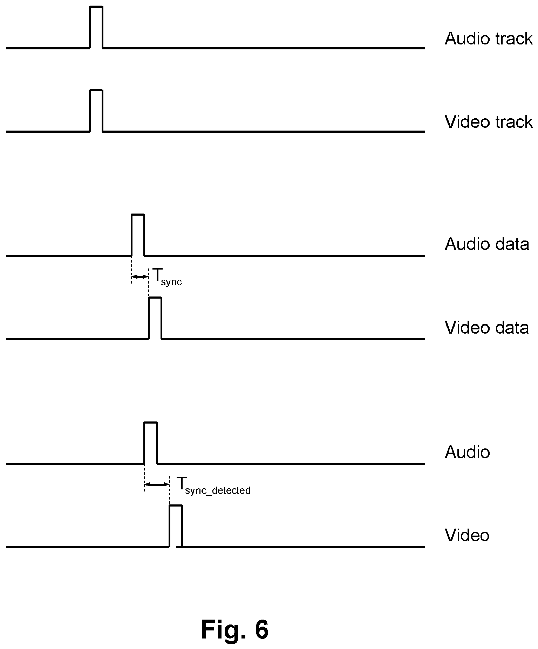

Fig. 6 shows example of synchronization error: originally, the audio and video track are synchronized, while they show a synchronization error $T_{sync}$ between the audio and video output of the AV player, which is increased by the $T_{sync-TV}$ at the AV presenting device output and measured as $T_{sync\_detected}$.

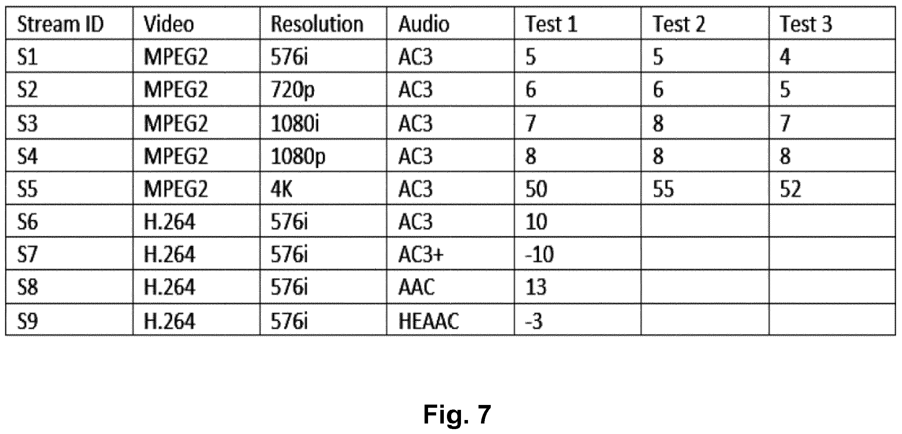

Fig. 7 shows an example of a measurement table with $T_{sync}$ values (T1-T3) collected by the data analyzer 140. The streams S1-S5 contained three test fragments each to test whether there is any difference in synchronization error while playing a stream. The streams S1-S5 differed by the video resolution. Based on these T1-T3 values, an average or mean value can be calculated or a plot of change of values can be presented. The synchronization error $T_{sync}$ will be deemed as unacceptable for stream S5 in case the allowable error is e.g. between -20 and +30 ms. The streams S6-S9 contained one test fragment each.

It can be easily recognized, by one skilled in the art, that the aforementioned method for testing audio-video synchronization may be performed and/or controlled by one or more computer programs executed at the data analyzer. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. A system for testing audio-video (AV) synchronization of an audio-video (AV) player (130), the system comprising:

   - a source (150) of at least one audio-video (AV) test stream comprising an audio track (11) with an audio test fragment (11T) and a video track (12) with a video test fragment (12T), wherein the audio test fragment (11T) has a known location with respect to the video test fragment (12T);
   - an audio-video (AV) presenting device (110) having an audio-video (AV) input interface (113), a video display screen (112) and an audio output (111);
   - a detector device (120) comprising a photodetector (122) for outputting a video detection signal with a video signal indicator corresponding to the detected video test fragment, an audio detector (121) for outputting an audio detection signal with an audio signal indicator corresponding to the detected audio test fragment, a timer (123) and a signal analyzer (124); wherein the detector device (120) is configured to be arranged with respect to the AV presenting device (110) such that the photodetector (122) can sense the image displayed by the display screen (112) and the audio detector (121) can sense the sound generated by the audio output (111) and wherein the signal analyzer (124) is configured to output a time difference ($T_{sync\_detected}$) between the audio signal indicator and the video signal indicator; and
   - a data analyzer (140) configured to receive and store the time difference ($T_{sync\_detected}$) for the test stream.

2. The system according to claim 1, wherein the test stream comprises a plurality of audio test fragments (11T) and video test fragments (12T).

3. The system according to any of previous claims, wherein the source (150) comprises a plurality of AV test streams that differ from each other by at least one of: video coding method, video resolution, audio coding method.

4. The system according to any of previous claims, wherein the audio test fragment (11T) is an audio tone of a predetermined frequency.

5. The system according to any of previous claims, wherein the video test fragment (12T) is a blank screen of a predetermined color, preferably black or white.

6. The system according to any of claims 1-4, wherein the video test fragment (12T) is a blank fragment of a screen, the fragment being of a predetermined color, preferably black or white.

7. The system according to any of previous claims, wherein the photodetector (122) is a photo sensitive diode, a phototransistor or a photoresistor.

8. The system according to any of previous claims, wherein the audio detector (121) is a microphone.

9. The system according to any of claims 1-7, wherein the audio detector (121) is connected to a headphone output of the AV presenting device (110).

10. A method for testing audio-video (AV) synchronization of an audio-video (AV) player in a system according to any of previous claims, the method comprising:

   - sending (201) a command to process a selected AV stream from the data analyzer (140) to the AV player (130);
   - collecting (202) detection data corresponding to detected synchronization error ($T_{sync\_detected}$) at the data analyzer (140);
   - correcting (203) the detected synchronization error ($T_{sync\_detected}$) by a predetermined synchronization error introduced by the AV presenting device (110) ($T_{sync\_TV}$) to obtain the actual synchronization error ($T_{sync}$) at the AV data output by the AV player (130); and
- storing (204) the synchronization error ($T_{sync}$) value for the selected AV stream.

**Fig. 1**

**Fig. 2**

**Fig. 3**

**Fig. 4**

**Fig. 5A**

**Fig. 5B**

**Fig. 5C**

**Fig. 6**

| Stream ID | Video | Resolution | Audio | Test 1 | Test 2 | Test 3 |
|---|---|---|---|---|---|---|
| S1 | MPEG2 | 576i | AC3 | 5 | 5 | 4 |
| S2 | MPEG2 | 720p | AC3 | 6 | 6 | 5 |
| S3 | MPEG2 | 1080i | AC3 | 7 | 8 | 7 |
| S4 | MPEG2 | 1080p | AC3 | 8 | 8 | 8 |
| S5 | MPEG2 | 4K | AC3 | 50 | 55 | 52 |
| S6 | H.264 | 576i | AC3 | 10 | | |
| S7 | H.264 | 576i | AC3+ | -10 | | |
| S8 | H.264 | 576i | AAC | 13 | | |
| S9 | H.264 | 576i | HEAAC | -3 | | |

Fig. 7

Europäisches
Patentamt

European
Patent Office

Office européen
des brevets

# EUROPEAN SEARCH REPORT

Application Number

EP 20 21 7940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/251329 A1 (MCCOY CHARLES [US] ET AL) 26 September 2013 (2013-09-26) * paragraph [0052] - paragraph [0063]; figures 3,4 * | 1-10 | INV. H04N21/43 H04N21/439 H04N21/44 H04N17/00 |
| X | US 2014/354829 A1 (COOPER J CARL [US]) 4 December 2014 (2014-12-04) * paragraph [0030] - paragraph [0044]; figures 1-4 * | 1,10 | |
| X | EP 3 468 183 A1 (THIRD RES INST MINISTRY PUBLIC SECURITY [CN]) 10 April 2019 (2019-04-10) * paragraph [0033] - paragraph [0037]; figure 1 * | 1,10 | |
| X | US 2011/013085 A1 (KULYK VALENTIN [SE]) 20 January 2011 (2011-01-20) * paragraph [0050] - paragraph [0059]; figures 6a,6b * | 1,10 | |
| A | US 2014/307107 A1 (YANG PING-HAN [TW] ET AL) 16 October 2014 (2014-10-16) * abstract * | 1-10 | TECHNICAL FIELDS SEARCHED (IPC) H04N |
| A | US 2015/195425 A1 (MCRAE MATTHEW BLAKE [US]) 9 July 2015 (2015-07-09) * abstract * | 1-10 | |
| A | WO 2020/053861 A1 (ICHANNEL IO LTD [IL]) 19 March 2020 (2020-03-19) * abstract * | 1-10 | |
| A | US 2007/126929 A1 (HAN CHAN-HO [KR] ET AL) 7 June 2007 (2007-06-07) * abstract * | 1-10 | |

-/--

The present search report has been drawn up for all claims

| Place of search | Date of completion of the search | Examiner |
|---|---|---|
| The Hague | 20 May 2021 | Santos Conde, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 158 927 B1 (LEI YONG [US] ET AL) 18 December 2018 (2018-12-18) * abstract * | 1-10 | |
| A | EP 3 171 593 A1 (ROHDE & SCHWARZ [DE]) 24 May 2017 (2017-05-24) * abstract * | 1-10 | |
| A | US 2007/245222 A1 (WANG DAVID [CA] ET AL) 18 October 2007 (2007-10-18) * abstract * | 1-10 | |
| A | WO 2005/099251 A1 (KONINKL PHILIPS ELECTRONICS NV [NL]; HENTSCHEL CHRISTIAN [DE]) 20 October 2005 (2005-10-20) * abstract * | 1-10 | |

**TECHNICAL FIELDS
SEARCHED     (IPC)**

The present search report has been drawn up for all claims

| Place of search | Date of completion of the search | Examiner |
|---|---|---|
| The Hague | 20 May 2021 | Santos Conde, José |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 024 878 A1**

## ANNEX TO THE EUROPEAN SEARCH REPORT
## ON EUROPEAN PATENT APPLICATION NO.

EP 20 21 7940

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2021

| Patent document cited in search report | | | Publication date | Patent family member(s) | | | Publication date |
|---|---|---|---|---|---|---|---|
| US 2013251329 | A1 | | 26-09-2013 | CN | 103327377 | A | 25-09-2013 |
| | | | | US | 2013251329 | A1 | 26-09-2013 |
| | | | | US | 2015195590 | A1 | 09-07-2015 |
| | | | | US | 2018109826 | A1 | 19-04-2018 |
| US 2014354829 | A1 | | 04-12-2014 | US | 2014354829 | A1 | 04-12-2014 |
| | | | | US | 2016316108 | A1 | 27-10-2016 |
| EP 3468183 | A1 | | 10-04-2019 | CN | 106060534 | A | 26-10-2016 |
| | | | | EP | 3468183 | A1 | 10-04-2019 |
| | | | | WO | 2017206935 | A1 | 07-12-2017 |
| US 2011013085 | A1 | | 20-01-2011 | EP | 2263232 | A2 | 22-12-2010 |
| | | | | US | 2011013085 | A1 | 20-01-2011 |
| | | | | WO | 2009115121 | A2 | 24-09-2009 |
| US 2014307107 | A1 | | 16-10-2014 | CN | 104103302 | A | 15-10-2014 |
| | | | | TW | 201440491 | A | 16-10-2014 |
| | | | | US | 2014307107 | A1 | 16-10-2014 |
| US 2015195425 | A1 | | 09-07-2015 | NONE | | | |
| WO 2020053861 | A1 | | 19-03-2020 | NONE | | | |
| US 2007126929 | A1 | | 07-06-2007 | CN | 1836443 | A | 20-09-2006 |
| | | | | EP | 1639816 | A1 | 29-03-2006 |
| | | | | KR | 20050005095 | A | 13-01-2005 |
| | | | | US | 2007126929 | A1 | 07-06-2007 |
| | | | | WO | 2005004470 | A1 | 13-01-2005 |
| US 10158927 | B1 | | 18-12-2018 | NONE | | | |
| EP 3171593 | A1 | | 24-05-2017 | EP | 3171593 | A1 | 24-05-2017 |
| | | | | US | 2017150140 | A1 | 25-05-2017 |
| | | | | WO | 2017088999 | A1 | 01-06-2017 |
| US 2007245222 | A1 | | 18-10-2007 | CA | 2541560 | A1 | 30-09-2007 |
| | | | | CN | 101796812 | A | 04-08-2010 |
| | | | | EP | 2008442 | A1 | 31-12-2008 |
| | | | | US | 2007245222 | A1 | 18-10-2007 |
| | | | | WO | 2007112552 | A1 | 11-10-2007 |
| WO 2005099251 | A1 | | 20-10-2005 | CN | 1973536 | A | 30-05-2007 |
| | | | | EP | 1736000 | A1 | 27-12-2006 |
| | | | | JP | 2007533189 | A | 15-11-2007 |
| | | | | KR | 20070034462 | A | 28-03-2007 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 20 21 7940

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2021

| Patent document cited in search report | Publication date | Patent family member(s) | | Publication date |
|---|---|---|---|---|
| | | US | 2007223874 A1 | 27-09-2007 |
| | | WO | 2005099251 A1 | 20-10-2005 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020160889 A